# FASCICULE DE BREVET EUROPEEN

(11) **EP 2 556 505 B1**
(45) Date de publication et mention de la délivrance du brevet: **04.06.2014**
(21) Numéro de dépôt: 11718455.6
(22) Date de dépôt: 05.04.2011
(51) Int. Cl.: G11B 7/245, G11B 7/25, G11B 7/246

(54) **SUPPORT D'ENREGISTREMENT REVERSIBLE PAR STOCKAGE OPTIQUE D'INFORMATIONS COMPRENANT DES MOLECULES A TRANSFERT DE CHARGE ORIENTABLES AYANT, DANS UNE ZONE LOCALE , UN ÉTAT COLLECTIF DE MOLECULES ET SONT APTES À GÉNÉRER UN SIGNAL DE SECOND HARMONIQUE**
OPTISCHER DATENSPEICHER DESSEN SUBSTRAT CHARGE TRANSFER MOLEKÜLE ENTHÄLT, DIE IN EINEM KOLLEKTIVEN ZUSTAND EIN FREQUENZVERDOPPLUNGS-SIGNAL ERZEUGEN
OPTICAL DATA MEMORY, HAS SUPPORT MATERIAL LAYER COMPRISING CHARGE TRANSFER MOLECULES, WHERE SOME MOLECULES ARE IN LOCAL PRIVILEGED ORIENTATION IN READING ZONES AND GENERATE SECOND HARMONIC SIGNAL

(30) Priorité: 07.04.2010 FR 1052635
(43) Date de publication de la demande: 13.02.2013
(73) Titulaire: Centre National de la Recherche Scientifique (CNRS), 75016 Paris (FR); Universite D'Angers, 49035 Angers Cedex (FR)
(72) Inventeur: GINDRE, Denis, F-49000 Angers (FR); SALLE, Marc, F-49240 Avrille (FR); KRUPKA, Oksana, Kyiv 01033 (UA); ILIOPOULOS, Konstantinos, F-49000 Angers (FR)
(74) Mandataire: Derambure, Christian
(86) Numéro de dépôt international: PCT/FR2011/050763
(87) Numéro de publication internationale: WO 2011/124840

(56) Documents cités:
- FR-A1- 2 900 762
- JP-A- 2005 092 074

## Description

La présente invention se rapporte au domaine technique des supports d'enregistrement.

L'invention concerne plus particulièrement un support d'enregistrement réversible par stockage optique d'au moins une information au sein d'un matériau support, le support d'enregistrement comprenant au moins une couche de matériau support comportant :
■ des molécules ayant, dans une zone locale, un état collectif de molécules parmi au moins un premier état collectif de molécules et un deuxième état collectif de molécules ;
■ les molécules ayant le premier état collectif de molécules dans la zone locale étant aptes à générer un signal de second harmonique caractéristique de ce premier état collectif de molécules lorsqu'elles sont excitées par un rayonnement électromagnétique de lecture.

L'invention concerne également un procédé d'enregistrement réversible sur le support d'enregistrement de données selon l'invention.

Il est connu de l'état de la technique des supports d'enregistrement de données comprenant au moins une couche d'un matériau support, ledit matériau support comprenant des molécules ayant, dans une zone locale, un état collectif de molécules parmi au moins un premier état collectif de molécules et un deuxième état collectif de molécules.

De tels supports d'enregistrement sont par exemple connus de la demande PCT-A-WO99/23650, qui décrit un disque optique comprenant des photochromes insérés dans une matrice. Les photochromes possèdent deux états physico-chimiques. De façon connue en soi, ces deux états physico-chimiques correspondent à une forme ouverte de la molécule, et à une forme fermée de la molécule. La modification de l'état physico-chimique des photochromes est réalisée par un rayonnement laser fortement focalisé par absorption à deux photons. Par ce rayonnement, la structure fermée des molécules est modifiée de sorte à produire des molécules ouvertes localement.

Il est connu en soi que l'effet d'absorption à deux photons est un phénomène quadratique en fonction de l'intensité, très localisé, qui permet donc de modifier l'état des molécules avec une forte résolution spatiale. L'absorption à deux photons permet donc de réaliser une écriture en profondeur dans la matrice formant le disque.

Le document précité enseigne également que les deux états physico-chimiques des photochromes ont des bandes d'absorption éloignées dans le visible, typiquement 450 nm pour le premier état, et 530 nm pour le deuxième état.

Cette différence dans les propriétés d'absorption permet donc de réaliser la lecture du disque. Pour ce faire, on envoie un rayonnement électromagnétique sur le disque et on détecte les spectres et une émission de fluorescence. Le rayonnement électromagnétique de lecture est également focalisé de façon précise sur la couche à lire et sur la zone de lecture de la couche. Ceci est réalisé par exemple par une excitation de fluorescence à deux photons des molécules de photochromes.

Ainsi, une première caractéristique d'absorption correspondra à un bit « 1 », et une deuxième caractéristique d'absorption correspondra à un bit « 0 ». Le disque optique tel que décrit dans le document précité permet donc le stockage de données.

Toutefois, le disque optique décrit dans le document précité possède l'inconvénient que les deux états des photochromes possèdent des stabilités différentes. Ainsi, on ne peut garantir que les photochromes d'un état donné ont été volontairement mis dans cet état, ou sont revenu à cet état par instabilité de l'état antagoniste. Cela crée donc des erreurs dans l'écriture du disque et en conséquence des erreurs dans sa lecture.

La sélectivité spatiale dans une direction perpendiculaire à la surface du disque est obtenue par insertion de couches intermédiaires inactives de 30 microns d'épaisseurs séparant les couches actives de 1 micron d'épaisseur, limitant ainsi la densité de stockage d'information.

Il est également connu du document FR-A-2 900 762 qui décrit une mémoire optique de données comprenant au moins une couche d'un matériau support formé des molécules à transfert de charge, plus spécialement de la famille des azobenzènes. Ces molécules présentent, dans une zone locale, un état collectif de molécules parmi au moins un premier état collectif de molécules pour lequel lesdites molécules présentent une orientation selon une direction privilégiée et un deuxième état collectif de molécules pour lequel lesdites molécules présentent une orientation aléatoire.

Ainsi, seules les molécules ayant une orientation selon une direction privilégiée sont aptes à générer un signal de second harmonique lorsqu'elles sont excitées dans ladite zone locale par un rayonnement électromagnétique de lecture.

Selon ce document, la mémoire permet donc de différencier les états collectifs locaux des molécules représentatifs des bits « 0 » ou « 1 » par détection d'un signal de second harmonique par rapport à la longueur d'onde du rayonnement électromagnétique de lecture.

En effet, une orientation privilégiée collective des molécules dans une zone locale de lecture permet de générer du rayonnement de second harmonique lorsqu'elles sont excitées par un rayonnement électromagnétique de lecture dans cette zone locale. Au contraire, une orientation aléatoire des molécules ne génère pas ce rayonnement de second harmonique. Il est donc possible de lire la mémoire selon l'invention par détection d'un signal de second harmonique après excitation par un rayonnement de lecture dans une zone locale de lecture.

Il est connu que le phénomène de génération de second harmonique est un effet quadratique en fonction de l'intensité du rayonnement électromagnétique. Grâce à cet effet quadratique, on peut donc détecter la génération de second harmonique avec une très bonne résolution spatiale, puisque les effets de molécules situées hors de la zone de focalisation seront négligeables par rapport aux effets des molécules de la zone de focalisation.

Toutefois, la mémoire et le procédé de lecture et d'écriture sur cette mémoire présentent plusieurs inconvénients. En effet, si le processus d'écriture consistant à focaliser une source laser dans une zone locale du matériau afin de provoquer un phénomène d'isomérisation des molécules d'azobenzènes est réversible, cette réversibilité est délicate à mettre en oeuvre. Plus particulièrement, pour obtenir la réversibilité de la phase d'écriture, il est nécessaire que les molécules composant le matériau support subisse une nouvelle orientation afin d'être toutes repositionnées selon une orientation privilégiée. Pour ce faire, il convient de placer à nouveau le matériau support sous un champ électrique intense, ce qui peut être délicat selon les applications envisagées.

Par ailleurs, l'utilisation d'azobenzènes génère, lors du processus de lecture, un transfert d'énergie vers les molécules d'azobenzènes, provocant ainsi leur déplacement. L'enregistrement est alors peu robuste lorsqu'il est soumis à plusieurs phases de lecture.

Il est également connu du document JP-A-2005092074 une méthode d'enregistrement par stockage optique destinée, d'une part, à provoquer des changements dans l'orientation d'un composé présentant des propriétés de biréfringence adéquates et, d'autre part, à fixer le composé dans cette orientation par réaction chimique afin d'enregistrer une information sous la forme d'une modulation de l'indice de réfraction dudit composé. Pour ce faire, la méthode décrite propose d'utiliser un composé cristallin de faible poids moléculaire et présentant un groupe polymérisable, un composé réalisant une absorption à deux photons ainsi qu'un initiateur de polymérisation.

Outre les inconvénients déjà mentionnés, cette méthode d'enregistrement présente l'inconvénient de n'autoriser qu'un seul et unique enregistrement. L'enregistrement proposé n'est donc pas réversible.

Dans un tout autre domaine, il est connu du document *« Coumarins in Polymers : From Light Harvesting to Photo-Cross-Linkable Tissue Scaffolds* » de Scott R. Trenor, Allan R. Shultz, Brian J. Love et Thimothy E. Long (Chem. Rev. 2004, 104, 3059-3077) la synthèse d'une molécule réalisée par greffe d'un squelette de coumarine sur une chaîne de polymère.

Ce document décrit comment une telle molécule a la capacité de réagir sous l'action de la lumière pour réaliser une cyclisation du squelette de coumarine et donner naissance à un cyclodimère. Ce processus physico-chimique de cyclodimérisation photoinduite de la coumarine et de ses dérivées est d'ailleurs aujourd'hui bien établi.

Un premier but de l'invention vise donc à réaliser un support d'enregistrement ainsi qu'un procédé d'enregistrement permettant de simplifier la réversibilité de l'enregistrement de données sur un matériau de support. Plus particulièrement, un but de l'invention est d'éviter l'utilisation systématique d'un champ électrique intense pour effacer les données sur le matériau support.

Un autre but de l'invention est de réaliser un support d'enregistrement ainsi qu'un procédé d'enregistrement permettant d'enregistrer des données de façon indétectable par des techniques de mesure classiques linéaires. Plus particulièrement, un but de l'invention est de réaliser l'enregistrement de données par modification des propriétés physiques non linéaires du matériau, sans influer d'un point de vue macroscopique sur les propriétés physiques linéaires de ce matériau.

Un autre but de l'invention est de réaliser un support d'enregistrement ainsi que des procédés et dispositifs de lecture et d'écriture permettant de différencier plus de deux états collectifs locaux des molécules en vue de moduler la réponse non linéaire obtenue par détection du signal de second harmonique. Plus particulièrement, il serait intéressant de mettre en oeuvre un support et un procédé d'enregistrement d'images composées de plusieurs teintes pouvant être décodées selon un processus optique prédéterminé sans qu'elle soit détectable à l'oeil nu.

A cette fin, L'invention concerne un support d'enregistrement réversible par stockage optique d'au moins une information au sein d'un matériau support, le support d'enregistrement comprenant au moins une couche d'un matériau support comportant :
■ des molécules de base (M) aptes à prendre, dans une zone locale (9), un premier état collectif (EC₁) de molécules (M, M') ;
   o les molécules (M, M') ayant le premier état collectif (EC₁) de molécules (M, M') étant aptes à générer un premier signal de second harmonique (SH₁) caractéristique de ce premier état collectif (EC₁) de molécules (M, M') lorsqu'elles sont excitées par un rayonnement électromagnétique de lecture (10) ;
   o les molécules de base (M) ayant le premier état collectif (EC₁) de molécules (M, M') étant aptes à se transformer, au moins en partie, en molécules transformée (M') pour passer dans un deuxième état collectif (EC₂) de molécules (M,M') lorsqu'elles sont excitées par un rayonnement électromagnétique d'écriture,
   o les molécules (M, M') ayant le deuxième état collectif (EC₂) de molécules (M,M') étant aptes à générer un deuxième signal de second harmonique (SH₂) caractéristique de ce deuxième état collectif (EC₂) de molécules (M,M') lorsqu'elles sont excitées par le rayonnement électromagnétique de lecture (10).

Selon l'invention, les molécules de base présentent une structure moléculaire basée sur un squelette de coumarine du type : 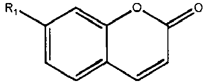
■ dans lequel R₁ correspond à un site d'accrochage du squelette de coumarine avec une matrice polymère.

Cette structure moléculaire est avantageuse car la molécule de base - l'unité de coumarine - et la molécule transformée - le cyclodimère obtenu sous l'action du rayonnement électromagnétique de lecture - présentent des caractéristiques électroniques très différentes d'un état à l'autre. En outre, un autre intérêt vient du fait que cette transformation moléculaire présente une bonne réversibilité puisque le cyclodimère peut s'ouvrir pour reformer l'unité coumarine initiale par simple irradiation UV, dans une bande spectrale étroite. D'autre part, cette structure moléculaire est avantageuse car elle permet d'éviter que des photons ne soient réabsorbés lors de la phase de lecture, ce qui implique des lectures multiples ne génèrent pas de dimères accidentellement. C'est notamment le cas pour des domaines spectraux rouges et infrarouges pour lesquels les diodes lasers commerciales sont déjà disponibles. En outre, puisque le spectre d'absorption de ces molécules est nettement moins proche du visible que d'autres molécules - telles que les molécules d'azobenzènes - le risque d'effacement accidentel des données à la lumière et donc la stabilité des films dans le temps sont augmentés.

Selon une réalisation, les molécules présentent une structure moléculaire basée sur un squelette de coumarine de type : 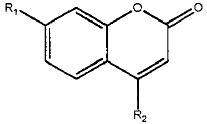
■ dans lequel R₂ correspond à un substituant.

Selon une réalisation, le substituant R2 est un groupement méthyle ou un atome d'hydrogène.

Selon une réalisation, la matrice polymère est un dérivé de méthacrylates de la forme : 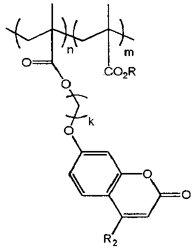
où : k, n et m sont positifs.

Selon une réalisation R est un méthyle (CH3) ou un butyle (*n*-C₄H₉), k est égal à 0, 2 ou 6 et n/m varie de 1/1 à 1/5.

Selon une réalisation, les molécules de base sont aptes à se transformer en molécules transformée par dimérisation photoinduite.

Selon une réalisation, les molécules de base sont aptes à prendre, dans une zone locale (9), un état collectif de molécules parmi n états collectifs de molécules, avec n un entier supérieur ou égal à 2 ; les molécules de chacun des n-1 états collectifs de molécules étant apte à générer un n-1_{ième} signal de second harmonique caractéristique de cet état collectif de molécules (MM') lorsqu'elles sont excitées par un rayonnement électromagnétique de lecture.

Une telle réalisation est avantageuse car elle permet de moduler la réponse non linéaire selon les différents états collectifs de molécules. De cette façon, le support d'enregistrement selon l'invention permet non seulement de stocker des informations binaires, mais également des informations à 3 bits, à 4 bits, ou d'une manière générale une information avec une dynamique sur plusieurs bits. Ainsi, un enregistrement d'image peut être réalisé sur un support invisible à l'oeil nu, invisible au moyen d'imageries traditionnelles linéaires et qui ne peut être lu qu'à partir d'un dispositif de lecture tel que mentionné précédemment.

Selon une autre réalisation, chacun des n état collectif de molécules (M,M') se caractérise par un taux caractéristique de molécules de base (M) et de molécules transformées (M').

Selon un autre aspect, l'invention concerne également un procédé d'enregistrement réversible sur un support d'enregistrement par stockage optique d'au moins une information au sein d'une couche d'un matériau support comprenant plusieurs étapes consistant à :
■ faire prendre à des molécules de base un premier état collectif de molécules dans une zone locale ;
   o les molécules ayant le premier état collectif de molécules dans la zone locale étant aptes à générer un premier signal de second harmonique caractéristique de ce premier état collectif de molécules lorsqu'elles sont excitées par un rayonnement électromagnétique de lecture ;
■ appliquer de façon sélective un rayonnement électromagnétique d'écriture au niveau d'au moins une zone d'écriture de ladite zone locale, de manière à transformer une partie des molécules de base ayant le premier état collectif de molécules en molécules transformées faisant ainsi passer les molécules ayant le premier état collectif de molécules dans un deuxième état collectif de molécules ;
   o les molécules ayant le deuxième état collectif de molécules étant aptes à générer un deuxième signal de second harmonique caractéristique de ce deuxième état collectif de molécules lorsqu'elles sont excitées par le rayonnement électromagnétique de lecture ;

Selon l'invention, les molécules de base présentent une structure moléculaire basée sur un squelette de coumarine du type : 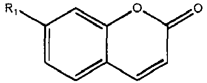
■ dans lequel R₁ correspond à un site d'accrochage du squelette de coumarine avec une matrice polymère.

Selon une réalisation, les molécules de base présentent une structure moléculaire basée sur un squelette de coumarine de type : 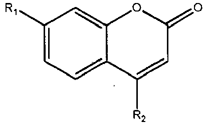
■ dans lequel R₂ correspond à un substituant.

Selon une réalisation, le substituant R2 est un groupement méthyle CH₃ ou un atome d'hydrogène H.

Selon une réalisation, la matrice polymère est un dérivé de méthacrylates de la forme : 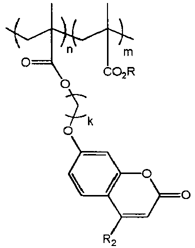
où : k, n et m sont positifs.

Selon une réalisation, R est un méthyle (CH3) ou un butyle (*n*-C₄H₉), k est égal à 0, 2 ou 6, et n/m varie de 1/1 à 1/5.

Selon une réalisation, le rayonnement électromagnétique d'écriture présente une longueur d'onde supérieure à 300 nm de sorte à générer une dimérisation photoinduite des molécules de base.

Selon une réalisation, les molécules de base présentent, dans une zone locale, un état collectif de molécules parmi n états collectifs de molécules, avec n un entier supérieur ou égal à 2, le procédé consistant à :
■ appliquer de façon sélective plusieurs rayonnements électromagnétiques d'écriture spécifiques au niveau de zones d'écriture,
■ chaque rayonnement électromagnétique d'écriture spécifique faisant passer lesdites molécules de base du premier état collectif de molécules en molécules transformées pour faire passer chaque zone d'écriture du premier état collectif de molécules à l'un des n états collectifs de molécules dans la zone l'écriture ;
■ de sorte que les molécules de chacun des n-1 états collectifs de molécules sont aptes à générer un n-1_{ième} signal de second harmonique caractéristique de cet état collectif de molécules (M) lorsqu'elles sont excitées par un rayonnement électromagnétique de lecture.

Selon une réalisation, le procédé d'enregistrement comporte une étape consistant à :
■ appliquer de façon sélective un rayonnement électromagnétique d'effacement au niveau d'au moins une zone d'effacement,
   o le rayonnement magnétique d'effacement transformant au moins une partie des molécules transformée en molécules de base.

Selon une réalisation, le procédé d'enregistrement comporte une étape consistant à :
■ appliquer de façon généralisée un rayonnement électromagnétique d'effacement au niveau des molécules transformées,
   o le rayonnement magnétique d'effacement transformant les molécules transformées en molécules de base.

Selon une réalisation, le rayonnement électromagnétique d'effacement est un rayonnement UV.

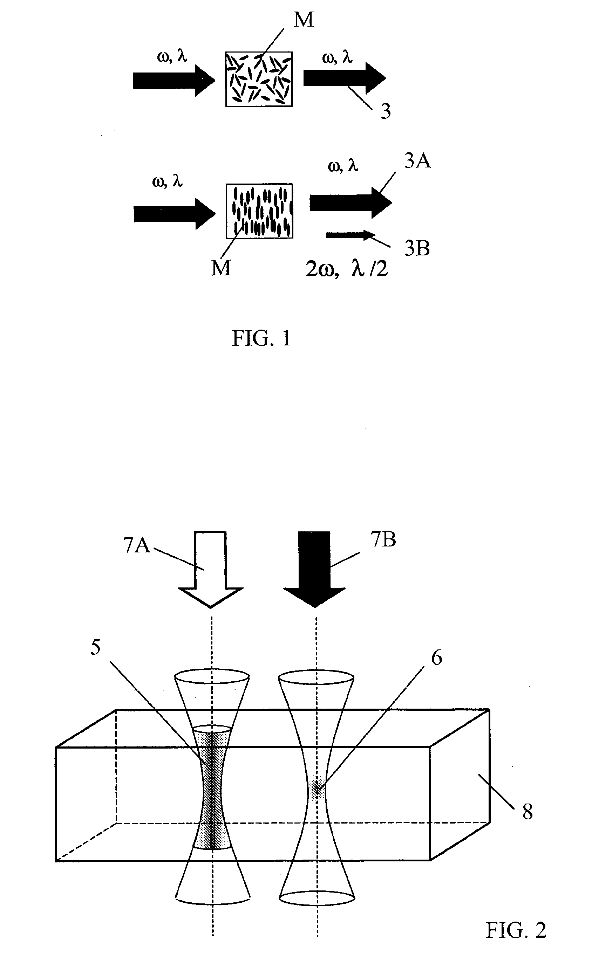

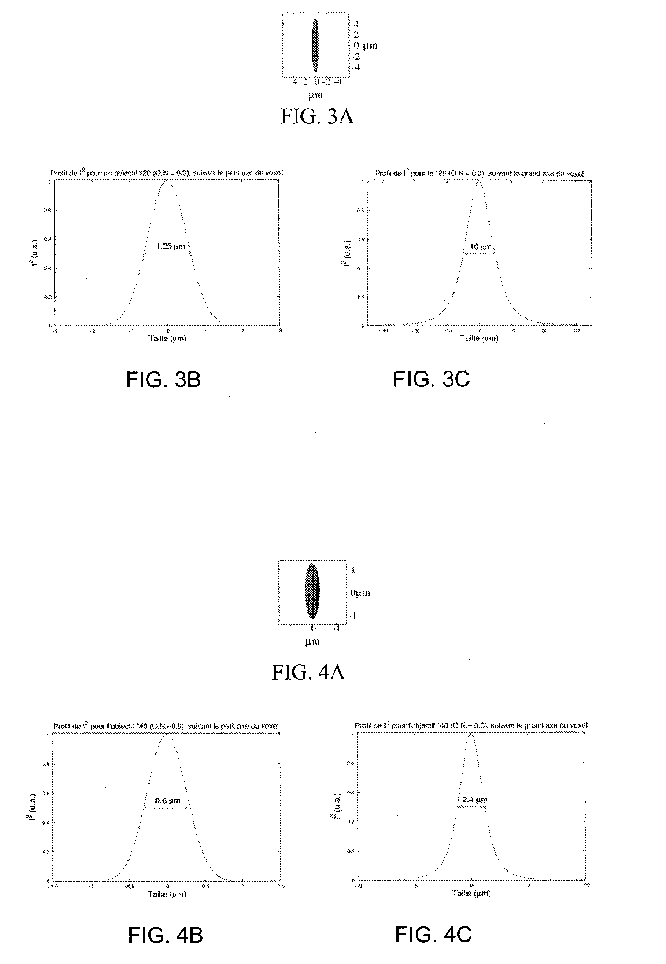

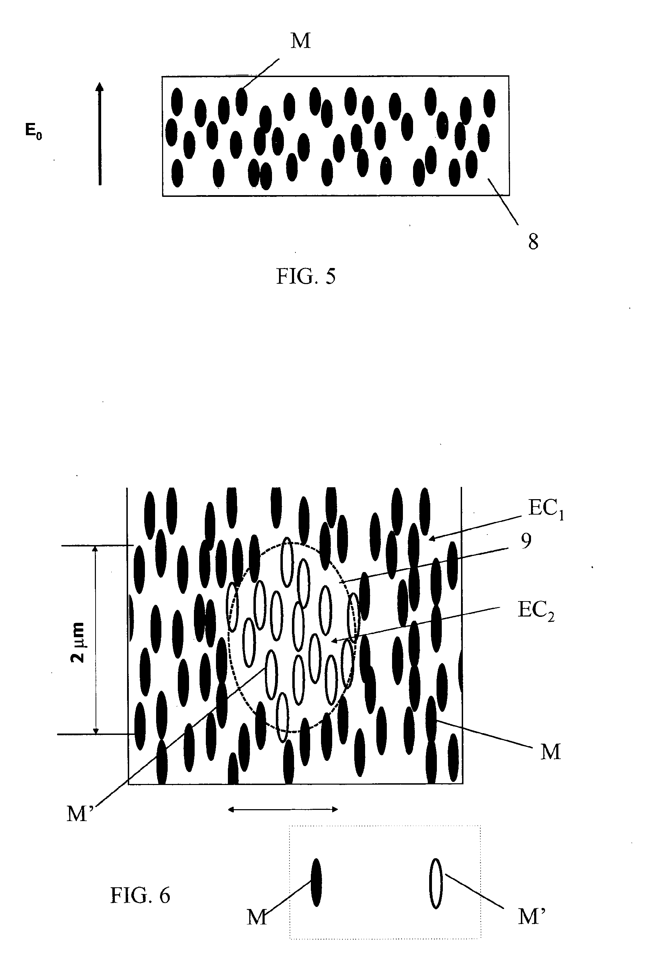

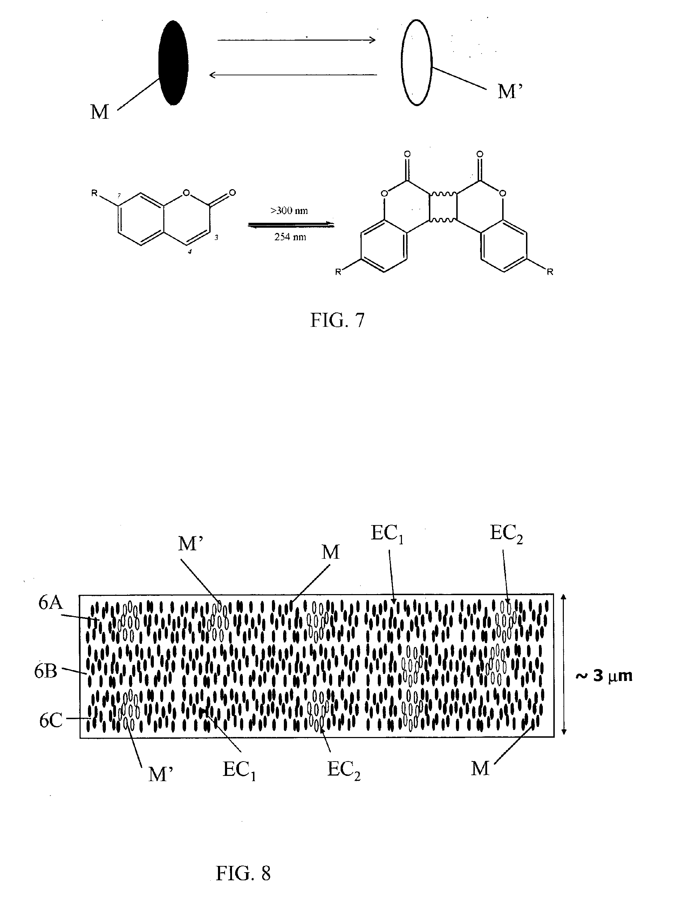

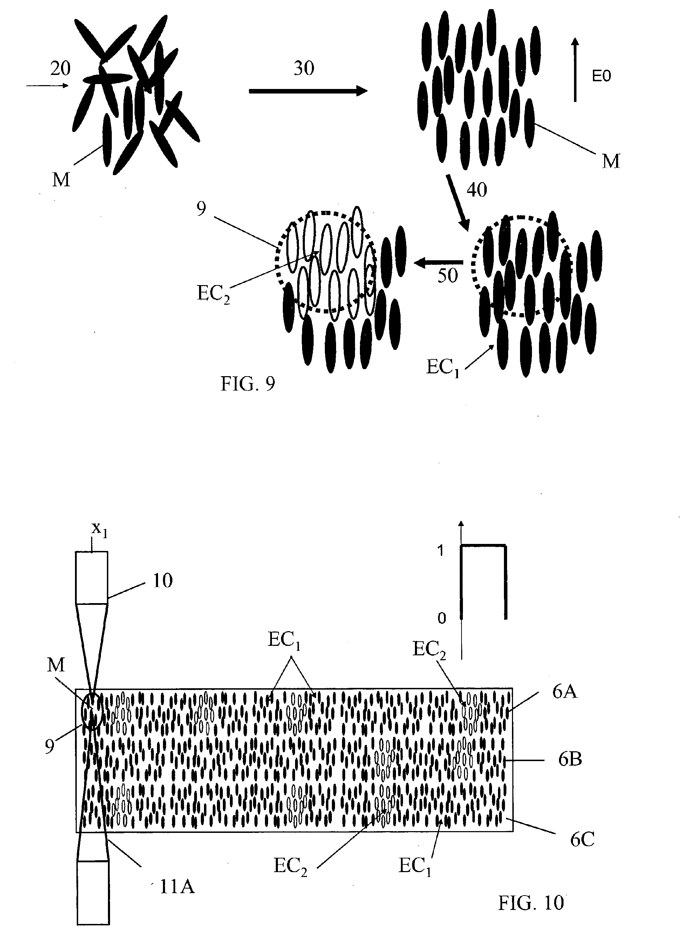

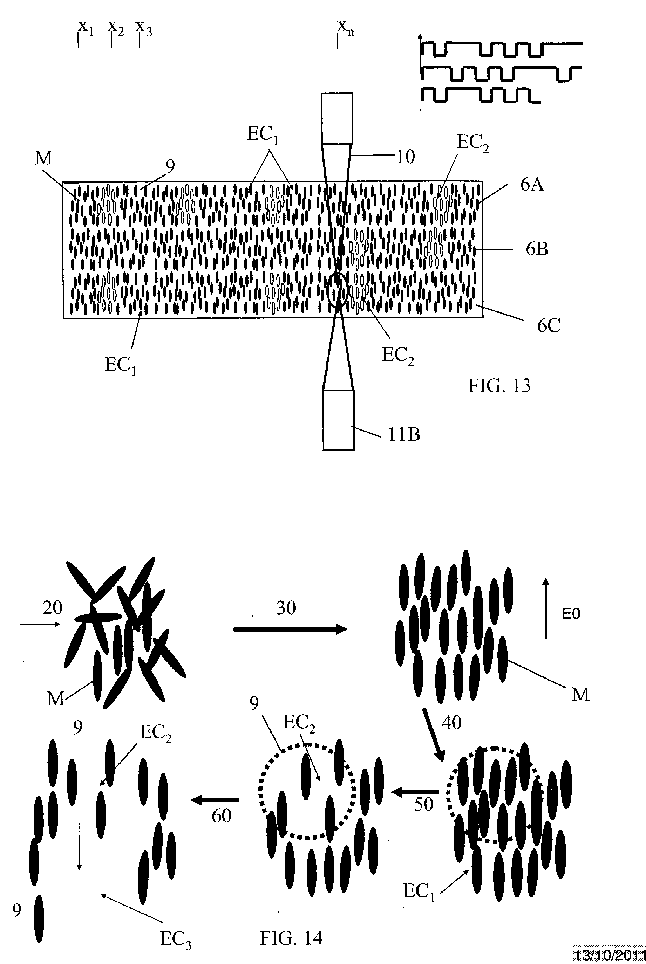

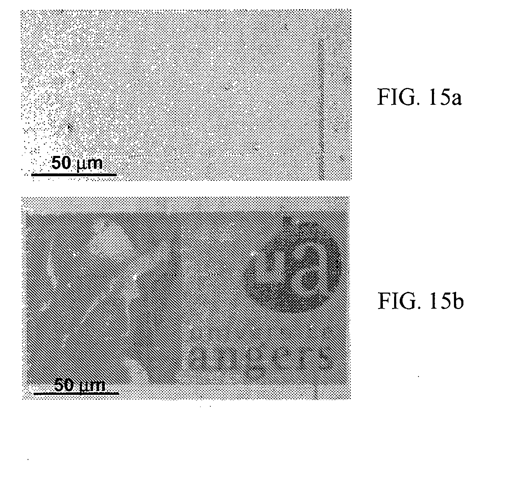

Sont maintenant décrits plusieurs modes de réalisation de l'invention en référence aux figures annexées dans lesquelles :
■ la figure 1 est une illustration du phénomène de génération de second harmonique due à l'orientation de molécules traversées par un faisceau lumineux ;
■ la figure 2 est une illustration de la sélectivité spatiale du phénomène d'absorption à deux photons dans un matériau ;
■ les figures 3A, 3B et 3C représentent la forme des volumes élémentaires des zones ou voxels, selon l'invention pour une première ouverture numérique de 0,3 d'un faisceau laser d'écriture ;
■ les figures 4A, 4B et 4C représentent la forme des volumes élémentaires des zones ou voxels, selon l'invention pour une deuxième ouverture numérique de 0,6 d'un faisceau laser d'écriture
■ la figure 5 représente une étape d'un procédé d'écriture selon l'invention dans laquelle on oriente les molécules selon une orientation privilégiée dans un support d'enregistrement selon l'invention ;
■ la figure 6 représente une étape d'un procédé d'écriture selon l'invention dans laquelle une partie des molécules orientées selon l'orientation privilégiée passe d'un premier état collectif à un deuxième état collectif par une étape d'écriture selon l'invention ;
■ la figure 7 représente une illustration de la réaction de dimérisation photoinduite utilisée pour écrire dans une mémoire selon l'invention ;
■ la figure 8 représente trois couches d'une mémoire comprenant des molécules ayant le premier état collectif et, localement, des molécules ayant le deuxième état collectif ;
■ la figure 9 représente l'ensemble des étapes d'écriture par modification de l'état collectif d'une partie des molécules selon l'invention ;
■ les figures 10 à 13 représentent des étapes de lecture d'une mémoire à trois couches selon l'invention, ainsi que la représentation binaire obtenue ;
■ la figure 14 représente l'ensemble des étapes d'écriture d'une image par modification de l'état collectif d'une partie des molécules selon l'invention ; et
■ les figures 15a et 15b illustre un exemple de réalisation d'image enregistrée sur un matériau support comportant des molécules selon l'invention.

Dans les figures ci-dessus, des références identiques se rapportent à des éléments techniques similaires. En particulier, les molécules de base utilisées dans le cadre de la présente invention seront désignées de façon générale par la référence M tandis que les molécules transformées seront désignée par la référence M'. Ces molécules M,M' peuvent alternativement se présenter sous différents états collectifs ECᵢ de molécules de bases M seules, d'une combinaison de molécules de base M et de molécules transformées M' ou de molécules transformées M' seules. Ainsi, chaque état collectif ECᵢ de molécules est apte à générer, lorsqu'elles sont excitées par un rayonnement électromagnétique de lecture, un signal de second harmonique SHᵢ caractéristique de cet état collectif ECᵢ de molécules et donc distinct du signal de second harmonique pouvant être généré par les autres états collectifs de molécules.

Ainsi, selon une réalisation non limitative, lors d'une excitation par rayonnement électromagnétique de lecture :
■ le premier état collectif EC₁ de molécules de base M génère un premier signal de second harmonique SH₁ maximal,
■ le deuxième état collectif EC₂ de molécules de base M en grande quantité et de molécules transformées M' en petite quantité génère un deuxième signal de second harmonique SH₂ affaibli vis-à-vis du premier signal de second harmonique SH₁,
■ le troisième état collectif EC₃ de molécules de base M en petite quantité et de molécules transformées M' en grande quantité génère un troisième signal de second harmonique SH₃ affaibli vis-à-vis du deuxième signal de second harmonique SH₂, etc., et
■ le n_{ième} état collectif ECₙ de molécules M^{i'} génère un n_{ième} signal de second harmonique SHₙ qui est nul.

Selon une réalisation alternative, les molécules se présentent soit selon un premier état collectif EC₁ de molécules de base M qui, lors d'une excitation par rayonnement électromagnétique de lecture, génèrent un premier signal de second harmonique SH₁ soit selon un deuxième état collectif EC₂ de molécules transformée M' qui, lors d'une excitation par rayonnement électromagnétique de lecture, génèrent un deuxième signal de second harmonique SH₂.

Ainsi, les propriétés de chacun des signaux de second harmonique mesurés - telles que l'intensité de ces signaux de second harmonique - peuvent être analysées pour en déduire l'état collectif des molécules M^{i'} de la zone considérée.

La figure 1 illustre le phénomène de génération de second harmonique due à l'état collectif de molécules de base M dans un volume.

Illustré dans la partie supérieure de la figure 1, lorsque les molécules de base M orientées aléatoirement dans un volume reçoivent un faisceau lumineux de longueur d'onde λ, il n'y a pas création de rayonnement de second harmoniqué. Le faisceau transmis 3 a donc la même longueur d'onde λ que le faisceau incident.

Illustré maintenant dans la partie inférieure de la figure 1, lorsque des molécules de base M ayant une orientation collective privilégiée selon une direction privilégiée reçoivent un faisceau lumineux de longueur d'onde λ, un premier faisceau 3A à une longueur d'onde λ est transmis, ainsi qu'un second faisceau 3B de longueur d'onde moitié λ/2 (ou de fréquence double). L'apparition de ce faisceau de longueur d'onde moitié (ou de fréquence double) est caractéristique d'une génération de second harmonique par les molécules orientées collectivement de façon privilégiée.

De façon connue en soi, des molécules orientées aléatoirement dans un volume local ne permettent pas la génération de ce signal de second harmonique.

Est maintenant illustré par la figure 2, le phénomène d'absorption à deux photons utilisé dans le cadre de la présente invention. Lorsqu'un milieu 8 est excité par un faisceau laser 7A correspondant à une longueur d'onde d'absorption des molécules du milieu 8, l'excitation par absorption à un photon est localisée sur une zone étendue 5, car le phénomène d'absorption à un photon est un phénomène linéaire.

Au contraire, par excitation du milieu 8 avec un faisceau laser 7B de longueur d'onde adapté pour l'absorption à deux photons, l'excitation par absorption à un photon est localisée sur une zone peu étendue 6, car le phénomène d'absorption à deux photons est un phénomène quadratique. Ainsi, il est possible d'obtenir une très bonne localisation de la zone d'excitation d'un milieu, par absorption à deux photons des molécules du milieu.

Illustré FIG. 3A, 3B, et 3C, pour une absorption à deux photons de molécules fluorescentes excitées par un laser, sont représentées les dimensions de la zone d'émission de fluorescence sous la forme d'un voxel pour un objectif d'ouverture numérique de 0,3.

La figure 3A représente une forme oblongue du voxel correspondant à la zone d'émission.

Il ressort de la figure 3B que le profil de l'intensité d'émission a une longueur caractéristique de 1,25 micromètres selon le petit axe du voxel dans un plan perpendiculaire au faisceau d'excitation. Il ressort par ailleurs de la figure 3C que le profil de l'intensité d'émission a une longueur caractéristique d'environ 10 micromètres selon le 15 grand axe du voxel dans la direction du faisceau d'excitation.

Les figures 4A, 4B et 4C illustrent les mêmes données pour un objectif d'ouverture numérique 0.6.

Cette fois, sur la figure 4B, le profil de l'intensité d'émission a une longueur caractéristique de 0,6 micromètres selon le petit axe du voxel dans un plan perpendiculaire au faisceau d'excitation.

Sur la figure 4C, on observe que le profil de l'intensité d'émission a une longueur caractéristique d'environ 2,4 micromètres selon le grand axe du voxel dans la direction du faisceau d'excitation.

Cette propriété de l'absorption à deux photons est connue en soi et est décrite de façon détaillée dans l'ouvrage de Y.R. Shen « The principles of Nonlinear Optics », Wiley, New-York 1984. La présente invention met en oeuvre de façon avantageuse le fait que les deux phénomènes physiques d'absorption à deux photons et de génération de second harmonique sont des phénomènes quadratiques, ce qui permet une bonne résolution spatiale de ces phénomènes.

La figure 5 illustre un procédé d'orientation collective dans une direction privilégiée de molécules de base M dans le cadre de la présente invention. Selon l'invention, on oriente collectivement selon une direction privilégiée, des molécules de base M dans un milieu 8.

Le milieu 8 est composé d'une matrice polymère, fonctionnalisée par des molécules de base M à transfert de charge dites push-pull possédant un moment dipolaire permanent et une forte hyperpolarisabilité quadratique. Les molécules de base M à transfert de charge utilisées dans le cadre de l'invention présentent avantageusement des caractéristiques électroniques très différentes selon l'état d'irradiation.

Les molécules de base M du milieu 8 comportent une structure moléculaire basée sur un squelette de coumarine, substitué ou non, greffé à une chaîne constituée par la matrice polymère. Les molécules de base M présentent alors une forme telle que présentée ci-dessous, dans laquelle R1 correspond à un site d'accrochage du squelette de coumarine avec une matrice polymère.

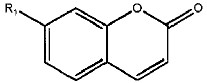

Le squelette coumarine utilisé peut notamment être associé à un dérivé de méthacrylates de la forme suivante : 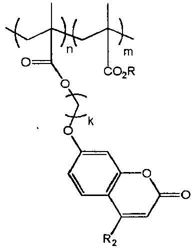 où :
■ R est un méthyle (CH₃) ou un butyle (*n*-C₄H₉) ;
■ k est égal à 0, 2 ou 6 ;
■ n/m varie de 1/1 à 1/5 ; et
■ le substituant R₂ est un groupement méthyle ou un atome d'hydrogène.

Toutefois, il convient de signaler que ces valeurs de k et n/m pourrait aisément être modifiée pour réaliser un support et un procédé d'enregistrement selon l'invention.

Les molécules de base M utilisées pour la mise en oeuvre du support d'enregistrement et du procédé selon l'invention peuvent également présenter une structure moléculaire choisi parmi les exemples suivants :

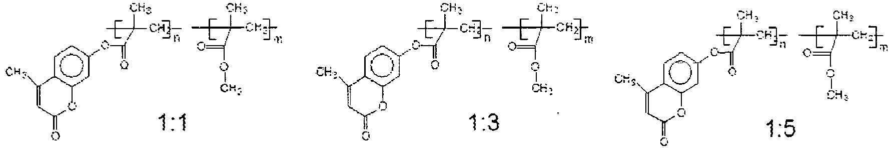

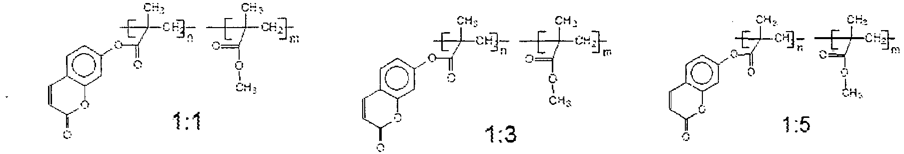

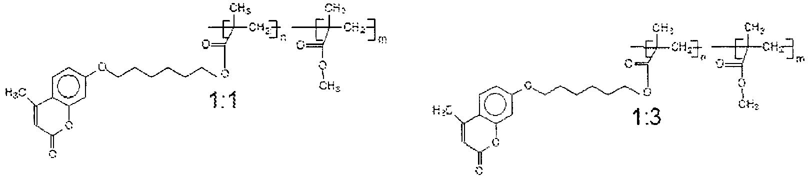

De façon alternative, le polymère support utilisé pour la mise en oeuvre du procédé selon l'invention pourrait également présenter une structure moléculaire différente de celle d'un polyméthacrylate.

Ces molécules de base M présentent un fort moment dipolaire permanent et peuvent donc être orientés sous un champ électrique. Ces molécules de base M peuvent également être fonctionnalisées avec des groupements acrylate permettant de greffer le chromophore à transfert de charge à la matrice de polymère et ainsi d'assurer une meilleure stabilité de l'orientation figée par photoréticulation ou photopolymérisation.

Le polymère utilisé est de préférence à haute température de transition vitreuse Tg, c'est-à-dire supérieure à la température ambiante. Sous l'effet d'un champ électrique Eo ayant lui-même une direction d'orientation, les molécules de base M s'orientent dans une direction privilégiée dans la matrice 8 chauffée au dessous de la Tg. Le champ électrique Eo est appliqué à l'aide d'électrodes ou par effet Corona, et possède une intensité de quelques kilovolts par millimètres.

Selon une variante, l'orientation des molécules à transfert de charge pourrait également être réalisé différemment.

Une fois les molécules de base M orientées dans une direction privilégiée, on rigidifie la matrice 8 soit par voie thermique (soit un refroidissement sous la Tg) de façon à fixer de façon permanente l'orientation des molécules de base M à transfert de charge dans une direction privilégiée dans le milieu 8.

A ce stade du procédé d'écriture, toutes les molécules de base M du milieu 8 sont orientées selon cette orientation privilégiée définissant ainsi un premier état collectif EC₁ de molécules M. Si la mémoire optique comprend une pluralité de couches, les molécules de toutes les couches sont orientées selon cette orientation privilégiée.

La figure 6 représente un état local modifié des molécules selon un procédé d'écriture de l'invention.

Selon un premier mode de réalisation de l'invention, des bits « 0 » sont écrits dans un milieu 8 tel que précédemment mentionné dans lequel les molécules de base M ont toutes été orientées dans une direction privilégiée selon un premier état collectif EC₁. Dans ce premier état collectif EC₁, les molécules de base M représentent des bits « 1 ». L'inscription des bits « 0 » est réalisée à l'aide d'un faisceau laser de d'écriture (non représenté) focalisé dans une zone d'écriture 9 formant un micro-volume. Le laser utilisé est par exemple un laser pulsé femtoseconde apte à générer une absorption à deux photons dans des volumes de taille microscopiques.

Le faisceau laser d'écriture est focalisé dans la zone d'écriture 9 de sorte à générer une absorption à deux photons tel que précédemment décrit. De la sorte, la zone d'écriture 9 est très localisée, et peut avoir des dimensions comme décrites en références aux FIG. 3A à 3C ou 4A à 4C, typiquement inférieures au micron cube.

Par l'effet du faisceau laser d'écriture focalisé, et par absorption à deux photons, une partie des molécules de base M qui étaient dans le premier état collectif EC₁ passent dans un deuxième état collectif EC₂ de molécules transformées M' dans le micro-volume 9.

Cet effet est généré par une réaction de cyclodimérisation [2+2] photoinduite de la coumarine et de ses dérivés, dont le schéma réactionnel est représenté sur la figure 7.

Sous l'action d'une lumière, de longueur d'onde supérieure à 300 nm semblable à celle générée par le faisceau laser d'écriture susmentionné, une cyclisation du squelette de coumarine se produit pour donner naissance à un cyclodimère faisant ainsi passer les molécules de base M du premier état collectif EC₁ à un deuxième état collectif EC₂ de molécules transformées M'. Cette réaction est avantageuse à plusieurs égards. Tout d'abord, le squelette de coumarine et le produit de sa cyclodimérisation présentent des propriétés électroniques très différentes, notamment en termes de délocalisation des charges. Ensuite, la cyclodimérisation du squelette de coumarine greffé à une chaîne polymérique entraîne une réticulation du polymère, avec pour conséquence un changement structural important au sein du matériau qui caractérise le deuxième état collectif EC₂ de molécules transformées M'. En outre, un intérêt majeur de cette transformation moléculaire réside dans la réversibilité du processus, car le produit de la cyclodimérisation peut s'ouvrir et reformer le squelette coumarine par irradiation UV à une longueur d'onde d'environ 254 nanomètres. Le passage du deuxième état collectif EC₂ de molécules transformées M' au premier état collectif EC₁ de molécules de base M est ainsi facilité.

Illustré FIG. 8, on a représenté trois couches 6A, 6B, 6C d'un milieu 8 comprenant des zones où des molécules de base M sont dans le premier état collectif EC₁, et des zones où les molécules transformées M' sont dans le deuxième état collectif EC₂. Cette configuration de mémoire comprenant trois couches est obtenue comme précédemment décrit par orientation collective préalable dans une direction privilégiée de toutes les molécules des trois couches 6A, 6B, 6C, puis par photodimérisation sélective des molécules de base M dans des zones d'écriture 9 par absorption à deux photons.

Les couches 6A, 6B, 6C comprennent donc différentes zones locales, une première partie de ces zones comprenant des molécules de base M dans un premier état collectif EC₁ correspondant à une orientation locale privilégiée dans les zones locales, et une deuxième partie de ces zones comprenant des molécules transformées M' dans un deuxième état collectif EC₂ de molécules correspondant aux micro-volumes des zones d'écriture 9 dans lesquels se sont produits les réactions de photodimérisation.

Les plans 6A, 6B et 6C sont typiquement séparés de quelques micromètres.

La figure 9 illustre l'effet sur des molécules à transfert de charge, du procédé d'écriture d'informations selon l'invention.

Dans une étape 20, on fournit des molécules de base M, de préférence à transfert de charge dans un matériau 8, par exemple réticulable ou polymérisable.

Dans une étape 30, ces molécules de base M sont orientées dans l'ensemble du matériau 8, par exemple sous l'effet d'un champ électrique Eo. Les molécules de base M sont ensuite fixées dans ce premier état collectif EC₁ de molécules M, par exemple par rigidification du matériau. Dans ce premier état collectif EC₁, les molécules de base M sont aptes à générer un premier signal de second harmonique SH₁ caractéristique dés lors qu'elles sont excitées par un rayonnement électromagnétique de lecture.

Dans une étape 40, un faisceau d'écriture est focalisé dans une zone d'écriture 9 par effet d'absorption à deux photons.

Dans une étape 50, les molécules de bases M réagissent sous l'effet du faisceau d'écriture pour former des molécules transformées M' faisant ainsi passer le premier état collectif EC₁ dans un deuxième état collectif EC₂ dans la zone d'écriture 9 . De ce fait, dans cette zone d'écriture, les molécules transformées M' génèrent un deuxième signal de second harmonique SH₂ affaibli vis-à-vis du premier signal de second harmonique SH₁ généré par les molécules de base M ayant le premier état collectif EC₁.

Il convient de noter que les moyens pour contrôler les positions du faisceau lumineux en fonction des bits « 0 » ou « 1 » à écrire sont connus de l'homme du métier. L'écriture d'un bit « 0 » nécessite dans ce cas l'application du faisceau localement, et l'écriture d'un bit « 1 » ne nécessite pas l'émission du faisceau. Le codage en « 0 » et « 1 » correspond donc sensiblement à une succession d'émission et de non émission du faisceau laser d'écriture.

Dans une étape de lecture, un faisceau de lecture sera transmis avec génération d'un premier signal de second harmonique SH₁ pour des molécules de base M dans le premier état collectif EC₁ et sans génération de second harmonique - ou bien avec génération d'un deuxième signal de second harmonique SH₂ affaibli - pour des molécules transformées M' dans le deuxième état collectif EC₂.

Les figures 10 à FIG. 14 illustrent un procédé de lecture des informations inscrites sur le disque conformément au procédé d'écriture tel que précédemment décrit.

Sur la figure 10, on a représenté une mémoire selon l'invention comprenant des zones dans lesquelles des molécules de base M sont dans un premier état collectif EC₁ et des zones dans lesquelles les molécules transformées M' sont dans un deuxième état collectif EC₂.

Ces zones sont lues successivement par un faisceau laser de lecture 10 de longueur d'onde λ positionné selon une position x₁. On détecte alors le faisceau transmis par le passage du faisceau incident au niveau d'une zone de lecture 9.

On note que la longueur d'onde λ du faisceau d'écriture peut être égale à 700 nm. Ainsi, par effet d'absorption à deux photons les photons à λ/2 (350 nm) sont absorbés par les molécules de base M et cette énergie est utilisée pour la dimérisation. Au contraire, le faisceau de lecture 10 est avantageusement effectué à 800 nm afin de générer un signal de second harmonique à 400 nm. Ceci est avantageux en ce qu'aucun des photons à 400 nanomètres ne sont réabsorbés par les molécules de base M de coumarine car celle-ci est complètement transparente au dessus de 360 nm. Donc des lectures multiples ne génèrent pas de molécules transformées M' accidentellement.

Selon l'invention, on détecte les signaux de second harmonique éventuellement générés par les molécules M. Comme précédemment décrit, le fait que des phénomènes de génération de second harmonique et d'absorption à deux photons soient tous deux des effets quadratiques permet à la zone d'écriture 9 correspondant au deuxième état collectif EC2 de molécule, transformées M' d'être d'une taille de l'ordre de la zone de lecture. Cette taille réduite des zones de lecture et d'écriture est valable aussi dans un plan normal au faisceau laser de lecture 10, que dans la direction du faisceau laser de lecture 10, ce qui permet une lecture et une écriture sur plusieurs couches 6A, 6B, 6C proches. Le pas de lecture et le pas d'écriture sont donc d'un ordre de grandeur similaire, ce qui permet de foumir une mémoire inscriptible et lisible.

Illustré FIG. 10, les molécules de base M dans la zone de lecture 9 correspondant à la zone de focalisation du faisceau de lecture 10 le premier état collectif EC₁. Un premier signal de second harmonique est donc généré par les molécules de base M dans la zone 9. Un faisceau transmis 11A de longueur d'onde λ/2 est donc détecté. La détection d'un tel signal correspond alors par exemple au codage d'un bit « 1 ». Ceci est illustré par exemple par le créneau valant 1 sur la figure 10.

Il est entendu que les moyens de détection du signal de second harmonique sont connus de l'homme du métier. De la même façon, les moyens électroniques pour convertir la détection ou non d'un signal de second harmonique en une information binaire sont également connus de l'homme du métier.

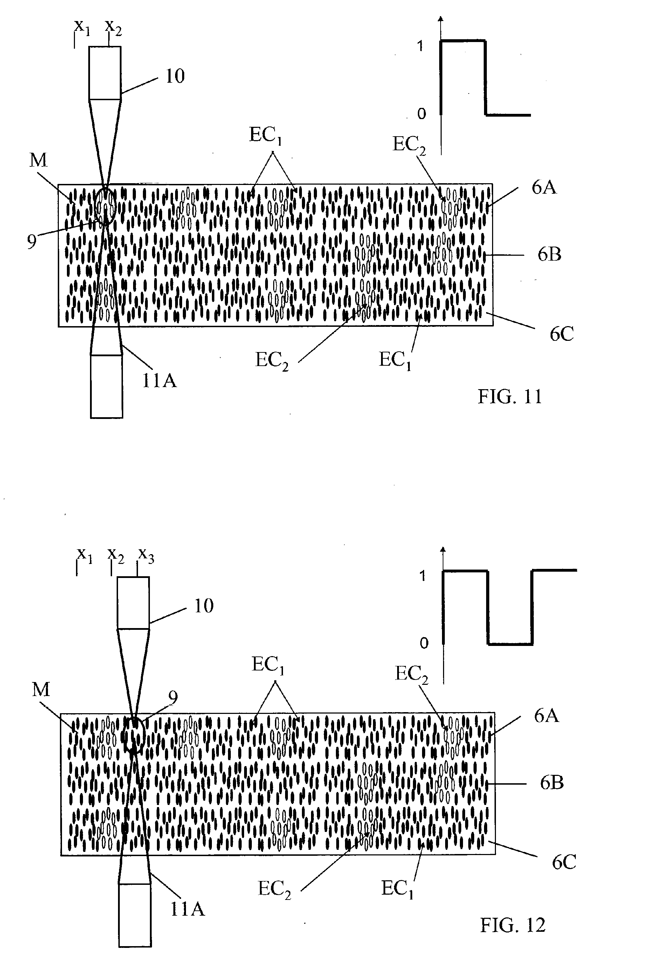

La figure 11 illustre un avancement du faisceau 10 de sorte à lire successivement l'ensemble des données des couches 6A, 6B, 6C. Entre les figures 10 et FIG. 11, le laser de lecture 10 a donc été déplacé de la position x₁ à la position x₂. Le laser de lecture 10 peut par exemple être déplacé dans un sens de lecture par des moyens mécaniques connus. La mémoire optique comprenant les couches 6A, 6B, 6C peut également être déplacée par rapport à un laser fixe par des moyens mécaniques connus.

Sur la figure 11, les molécules transformées M' dans la nouvelle zone de lecture 9 correspondant à la zone de focalisation du faisceau de lecture 10 sont dans le deuxième état collectif EC₂ au sein de la nouvelle zone 9. Aucun signal de second harmonique - ou un deuxième signal de second harmonique SH₂ affaibli par rapport au premier signal de second harmonique SH₁ généré par les molécules de base M figées dans le premier état collectif EC₁ - est généré par les molécules transformées M' de cette zone 9. Le faisceau transmis 11B ne comprend donc aucune composante de longueur d'onde λ/2 ou bien cette composante de longueur d'onde λ/2 est affaiblie, ce qui correspond par exemple à un bit « 0 » , comme illustré par le créneau de la figure 11 à la valeur O.

Illustré FIG.12, le faisceau lumineux de lecture 10 est décalé sur la mémoire vers une nouvelle zone de lecture 9 correspondant à une position x₃ du laser de lecture 10. Cette fois, les molécules de base M sont dans le premier état collectif EC₁ au sein de la zone de lecture. Un premier signal de second harmonique SH₁ est donc généré par les molécules de base M de cette zone 9. Un faisceau transmis 11A de longueur d'onde λ/2 est donc détecté, ce qui correspond par exemple à un bit « 1 », comme illustré par le créneau de la figure 12 à la valeur O.

L'ensemble des couches 6A, 6B et 6C de la mémoire selon l'invention peuvent alors être lues comme précédemment décrit. En particulier, illustré FIG. 13, le faisceau laser de lecture 10 peut être focalisé sur une quelconque des couches du matériau comprenant des molécules M. Le laser de lecture est positionné selon une position xₘ sur un axe, et une altitude zₘ. Sur la figure 13, le faisceau est focalisé sur la couche 6C vers une zone de lecture 9, dans laquelle les molécules transformées M' sont dans le deuxième état collectif EC₂. Comme précédemment, aucun signal de second harmonique - ou un deuxième signal de second harmonique SH₂ affaibli par rapport au premier signal de second harmonique SH₁ généré par les molécules de base M figées dans le premier état collectif EC₁ - est détecté dans le faisceau transmis 11B, et un bit « 0 » est donc lu, comme illustré par le créneau à la valeur 0 correspondant à la troisième couche.

Le support d'enregistrement tel que précédemment décrit peut être organisé en un disque comprenant une ou plusieurs couches. On écrit alors sur les différentes couches comme il a été précédemment décrit. Le nombre de couches du disque n'est limité selon l'invention que par la nécessité de maintenir le faisceau d'écriture proche de la zone d'écriture 9. En particulier, pour une distance focale de l'objectif d'écriture de l'ordre de 500 micromètres, il est possible de fournir une mémoire ayant une centaine de couches de quelques micromètres d'épaisseur.

Le support d'enregistrement ainsi obtenu permet donc une inscription en volume de bits de taille micrométrique.

On note que le support d'enregistrement précédemment décrit peut également être réinscriptible. En effet, lorsque des rayons UV irradient la mémoire optique en général ou bien sont focalisés sur les molécules transformées M' ayant le deuxième état collectif EC₂, celles-ci retrouvent le premier état collectif EC₁ et les informations enregistrées sont donc supprimées. Ainsi, la suppression et la réinscription d'informations sur la mémoire optique selon l'invention sont grandement facilitées. L'application du procédé d'écriture selon l'invention comprenant des étapes successives d'orientation globale des molécules selon une direction privilégiée et de désorientation locale en fonction des données à écrire permet donc de réécrire dans une mémoire selon l'invention.

La figure 13 représente un autre mode de réalisation de l'invention dans lequel le support d'enregistrement permet d'enregistrer des informations binaires, quaternaires, etc.

En effet, les modes de réalisation précédents ne font mention que de deux états collectifs de molécules distincts. Toutefois, selon une réalisation de l'invention, la phase d'écriture peut être réalisée de sorte à moduler la réponse générée lorsque la zone locale est soumise au faisceau de lecture 10.

Selon cette réalisation, et comme précédemment, on fournit dans une étape 20 des molécules de base M à transfert de charge dans un matériau 8.

Dans une étape 30, ces molécules de base M sont orientées dans l'ensemble du matériau 8, par exemple sous l'effet d'un champ électrique Eo. Les molécules de base M sont ensuite fixées dans ce premier état collectif EC₁ de molécules M, par exemple par rigidification du matériau. Dans ce premier état collectif EC₁, les molécules de base M sont aptes à générer un premier signal de second harmonique SH₁ caractéristique dés lors qu'elles sont excitées par un rayonnement électromagnétique de lecture.

Dans une étape 40, un faisceau d'écriture est focalisé dans une zone d'écriture 9 par effet d'absorption à deux photons.

Dans une étape 50, après que les molécules de base M aient toutes été orientées dans une direction privilégiée selon un premier état collectif EC₁ - dans lequel les molécules de base M représentent des bits « 1 » - l'inscription des bits réalisé par focalisation du faisceau laser d'écriture dans la zone d'écriture 9 peut permettre d'encoder des bits « 2 », « 3 » jusqu'à « n » et donc de moduler la réponse non linéaire reçue lors de la phase de lecture. Plus particulièrement, une partie seulement des molécules de base M sont passées en molécules transformées M'. Ainsi, le deuxième état collectif EC₂ de molécules est formé à la fois de molécules de base M et de molécules transformées M', ce qui permet - lorsque les molécules de base M et les molécules transformées M' de cette zone locale sont illuminée par un faisceau de lecture - de générer un deuxième signal de second harmonique SH₂ affaiblie vis-à-vis du premier signal de second harmonique SH₁ généré par les molécules de base M ayant le premier état collectif EC₁.

Pour ce faire, l'on fait varier l'intensité et le temps de focalisation du faisceau laser d'écriture dans les zones d'écritures 9 présélectionnées de sorte à moduler le taux de molécules de base M photodimérisées en molécules tranformées M' dans chacune des zones d'écriture.

On peut ensuite, lors d'une nouvelle étape d'écriture faire passer une zone locale dans un troisième état collectif EC₃ de molécules en transformant une partie des molécules de base M d'une zone ayant un deuxième étant collectif EC₂ en molécules transformées M'. Ainsi, dans cette zone d'écriture le taux de molécule de base M par rapport au nombre de molécule transformées M' est diminué et cet état collectif de molécules génère donc un troisième signal de second harmonique SH₃ affaiblie vis-à-vis du deuxième signal de second harmonique SH₂ généré par les molécules ayant le deuxième état collectif EC₂.

Ainsi à chaque niveau d'intensité ou à chaque temps d'exposition à intensité constante correspond un taux de dimérisation induite et par conséquent un taux de molécules de base M dont dépend le signal de second harmonique susceptible d'être généré dans cette zone locale. Une fois cette étape calibrée, le principe fonctionne toujours de la même façon et à chaque signal de second harmonique caractéristique correspond un état collectif ECₙ de molécules prédéterminé.

Ces étapes d'écritures peuvent être répétées plusieurs fois afin de générer n états collectifs ECₙ de molécules aptes à générer n signaux de second harmonique distincts.

Ainsi, lorsque le faisceau de lecture 10 est focalisé sur le matériau 8, chacun des n état collectifs de molécules génère un n_{ième} signal de second harmonique caractéristique de l'enregistrement qui a été réalisé sur la zone d'écriture 9 considérée.

De cette façon, le support d'enregistrement selon l'invention permet non seulement de stocker des informations binaires, mais également des informations à 3 bits, à 4 bits, ou d'une manière générale une information avec une dynamique sur plusieurs bits. Cette réalisation, est avantageuse notamment dans le cadre de l'enregistrement d'images. Il est alors possible d'enregistrer une image sur un support qui soit invisible à l'oeil nu, invisible au moyen d'imageries traditionnelles linéaires et qui ne peut être lu qu'à partir d'un dispositif de lecture tel que mentionné précédemment.

Les figures 14a et 14b illustrent la mise en oeuvre d'un tel procédé d'enregistrement d'image.

La figure 15a représente un matériau 8 composé de molécules de base M selon l'invention placées selon un premier état collectif EC₁ de molécules de base M à orientation privilégiée. Tel que le représente cette FIG 15a, il a dans un premier temps été procédé à une phase de lecture telle que décrite précédemment, au cours de laquelle un faisceau de lecture 10 présentant une longueur d'onde de 800 nanomètres à une puissance de 5 mW à fait apparaître une image blanche qui correspond à un signal de second harmonique uniforme à la longueur d'onde 400 nm.

Il a ensuite été procédé à une phase d'écriture telle que précédemment décrite, à partir d'un faisceau laser d'écriture présentant une longueur d'onde de 695 nanomètres, une puissance de 26 mW et pour un temps d'exposition compris entre 1 milliseconde et 1000 millisecondes selon les zones d'écriture considérées.

Puis, a été renouvelée la phase de lecture telle que précédemment décrite et selon des conditions expérimentales similaires. Cette seconde phase de lecture a permis d'obtenir l'image représentée sur la figure 15b.

Il convient de souligner que l'invention n'est pas limitée aux exemples décrits ci-dessus mais s'étend au contraire à toute réalisation susceptible d'être mises en oeuvre par l'homme du métier sur la base de ces informations.

Notamment, la description fait mention de molécules de base M présentant un squelette de coumarine tel que décrit précédemment mais un mécanisme similaire à celui de l'invention pourrait être utilisé à partir de molécules différentes présentant des propriétés similaires. Notamment, le support d'enregistrement ainsi que le procédé d'enregistrement selon l'invention pourraient être mis en oeuvre grâce à d'autres types de molécules actives en génération de second harmonique possédant la propriété de photodimériser - de façon réversible - sous l'action d'une source lumineuse de longueur d'onde prédéterminée.

## Revendications

1. Support d'enregistrement réversible par stockage optique d'au moins une information au sein d'un matériau support, le support d'enregistrement comprenant au moins une couche d'un matériau support comportant :
■ des molécules de base (M) aptes à prendre, dans une zone locale (9), un premier état collectif (EC₁) de molécules (M, M') ;
o les molécules (M, M') ayant le premier état collectif (EC₁) de molécules (M, M') étant aptes à générer un premier signal de second harmonique (SH₁) caractéristique de ce premier état collectif (EC₁) de molécules (M, M') lorsqu'elles sont excitées par un rayonnement électromagnétique de lecture (10) ;
o les molécules de base (M) ayant le premier état collectif (EC₁) de molécules (M, M') étant aptes à se transformer, au moins en partie, en molécules transformée (M') pour passer dans un deuxième état collectif (EC₂) de molécules (M,M') lorsqu'elles sont excitées par un rayonnement électromagnétique d'écriture,
o les molécules (M, M') ayant le deuxième état collectif (EC₂) de molécules (M,M') étant aptes à générer un deuxième signal de second harmonique (SH₂) caractéristique de ce deuxième état collectif (EC₂) de molécules (M,M') lorsqu'elles sont excitées par le rayonnement électromagnétique de lecture (10) ;
**caractérisé en ce que**, les molécules de base (M) présentent une structure moléculaire basée sur un squelette de coumarine du type : 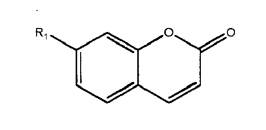
■ dans lequel R₁ correspond à un site d'accrochage du squelette de coumarine avec une matrice polymère.

2. Support d'enregistrement selon la revendication 1, dans lequel les molécules de base (M) présentent une structure moléculaire basée sur un squelette de coumarine de type : 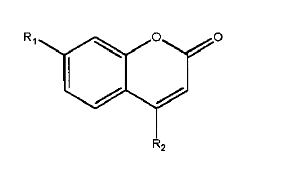
■ dans lequel R₂ correspond à un substituant.

3. Support d'enregistrement selon la revendication 2, dans lequel le substituant R2 est un groupement méthyle.

4. Support d'enregistrement selon la revendication 2, dans lequel le substituant R2 est un atome d'hydrogène.

5. Support d'enregistrement selon l'une quelconque des revendications 1 à 4, dans lequel la matrice polymère est un dérivé de méthacrylates de la forme ; 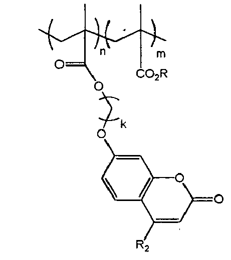
où : k, n et m sont des nombres positifs.

6. Support d'enregistrement selon la revendication 5, dans lequel :
■ R est un méthyle (CH3) ou un butyle (*n*-C₄H₉) ;
■ k est égal à 0, 2 ou 6 ; et
■ n/m ayant une valeur comprise entre 1/1 à 1/5.

7. Support d'enregistrement selon l'une quelconque des revendications 1 à 6, dans lequel les moléciles de base (M) sont aptes à se transformer en molécules transformée (M') par dimérisation photoinduite.

8. Support d'enregistrement selon l'une quelconque des revendications 1 à 7, dans lequel :
■ les molécules de base (M) sont aptes à prendre, dans une zone locale (9), un état collectif de molécules (M,M') parmi n états collectifs de molécules (M,M'), avec n un entier supérieur ou égal à2;
■ les molécules (M,M') de chacun des n-1 états collectifs de molécules (M,M') étant apte à générer un n-1_{ième} signal de second harmonique (SHₙ₋₁) caractéristique de cet état collectif de molécules (MM') lorsqu'elles sont excitées par un rayonnement électromagnétique de lecture (10).

9. Support d'enregistrement selon la revendication 8, dans lequel chacun des n état collectif de molécules (M,M') se **caractérise par** un taux caractéristique de molécules de base (M) et de molécules transformées (M').

10. Procédé d'enregistrement réversible sur un support d'enregistrement par stockage optique d'au moins une information au sein d'une couche d'un matériau support comprenant plusieurs étapes consistant à :
■ faire prendre à des molécules de base (M) un premier état collectif (EC₁) de molécules (M, M') dans une zone locale (9) ;
o les molécules (M, M') ayant le premier état collectif (EC₁) de molécules (M, M') dans la zone locale (9) étant aptes à générer un premier signal de second harmonique (SH₁) caractéristique de ce premier état collectif (EC₁) de molécules (M, M') lorsqu'elles sont excitées par un rayonnement électromagnétique de lecture (10) ;
■ appliquer de façon sélective un rayonnement électromagnétique d'écriture au niveau d'au moins une zone d'écriture de ladite zone locale (9), de manière à transformer une partie des molécules de base (M) ayant le premier état collectif (EC₁) de molécules (M, M') en molécules transformées (M') faisant ainsi passer les molécules (M, M') ayant le premier état collectif (EC₁) de molécules (M, M') dans un deuxième état collectif (EC₂) de molécules (M,M') ;
o les molécules (M, M') ayant le deuxième état collectif (EC₂) de molécules (M,M') étant aptes à générer un deuxième signal de second harmonique (SH₂) caractéristique de ce deuxième état collectif (EC₂) de molécules (M,M') lorsqu'elles sont excitées par le rayonnement électromagnétique de lecture (10) ;
**caractérisé en ce que** les molécules de base (M) présentent une structure moléculaire basée sur un squelette de coumarine du type : 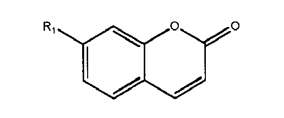
■ dans lequel R₁ correspond à un site d'accrochage du squelette de coumarine avec une matrice polymère.

11. Procédé d'enregistrement selon la revendication 10, dans lequel les molécules de base (M) présentent une structure moléculaire basée sur un squelette de coumarine de type : 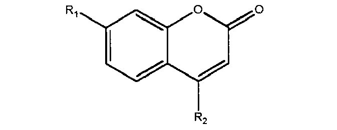
o dans lequel R₂ correspond à un substituant.

12. Procédé d'enregistrement selon la revendication 11, dans lequel le substituant R2 est un groupement méthyle CH₃.

13. Procédé d'enregistrement selon la revendication 11, dans lequel le substituant R2 est un atome d'hydrogène H.

14. Procédé d'enregistrement selon l'une quelconque des revendications 10 à 13, dans lequel la matrice polymère est un dérivé de méthacrylates de la forme : 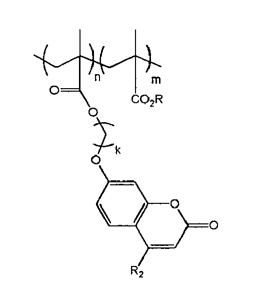
où : k, n et m sont des nombres positifs.

15. Procédé d'enregistrement selon la revendication 14, dans lequel :
■ R est un méthyle (CH3) ou un butyle (*n*-C₄H₉) ;
■ k est égal à 0, 2 ou 6 ; et
■ n/m ayant une valeur comprise entre 1/1 à 1/5.

16. Procédé d'enregistrement selon la revendication 15, dans lequel le rayonnement électromagnétique d'écriture présente une longueur d'onde supérieure à 300 nm de sorte à générer une dimérisation photoinduite des molécules de base (M)

17. Procédé d'enregistrement selon l'une des revendications 10 ou 16, dans lequel les molécules de base (M) présentent, dans une zone locale (9), un état collectif de molécules (M) parmi n états collectifs (ECₙ) de molécules (M,M'), avec n un entier supérieur ou égal à 2, le procédé consistant à :
■ appliquer de façon sélective plusieurs rayonnements électromagnétiques d'écriture spécifiques au niveau de zones d'écriture,
o chaque rayonnement électromagnétique d'écriture spécifique faisant passer lesdites molécules de base (M) du premier état collectif (EC₁) de molécules (M,M') en molécules transformées (M') pour faire passer chaque zone d'écriture du premier état collectif (EC₁) de molécules (M,M') à l'un des n états collectifs de molécules (M,M') dans la zone l'écriture ;
o de sorte que les molécules (M, M') de chacun des n-1 états collectifs (ECₙ₋₁) de molécules (M) sont aptes à générer un n-1_{ième} signal de second harmonique (SHₙ₋₁) caractéristique de cet état collectif (ECₙ₋₁) de molécules (M) lorsqu'elles sont excitées par un rayonnement électromagnétique de lecture (10).

18. Procédé d'enregistrement selon l'une quelconque des revendications 10 à 17, comportant une étape consistant à :
■ appliquer de façon sélective un rayonnement électromagnétique d'effacement au niveau d'au moins une zone d'effacement,
o le rayonnement magnétique d'effacement transformant au moins une partie des molécules transformée (M') en molécules de base (M).

19. Procédé d'enregistrement selon l'une quelconque des revendications 10 à 17, comportant une étape consistant à :
■ appliquer de façon généralisée un rayonnement électromagnétique d'effacement au niveau des molécules transformée (M'),
o le rayonnement magnétique d'effacement transformant les molécules transformée (M') en molécules de base (M).

20. Procédé d'enregistrement selon la revendication 19, dans lequel le rayonnement électromagnétique d'effacement est un rayonnement UV.

## Patentansprüche

1. Reversibler Aufzeichnungsträger per optischer Speicherung wenigstens einer Information auf einem Trägermaterial, wobei der Aufzeichnungsträger wenigstens eine Schicht eines Trägermaterials umfasst, umfassend:
■ Basismoleküle (M), die geeignet sind, in einem lokalen Bereich (9) einen ersten kollektiven Zustand (EC₁) der Moleküle (M, M') anzunehmen;
o Wobei die Moleküle (M, M') den ersten kollektiven Zustand (EC₁) der Moleküle (M, M') haben, die geeignet sind, ein erstes Signal zweiter Oberschwingung (SH₁) zu generieren, das für diesen ersten kollektiven Zustand (EC₁) der Moleküle (M, M') charakteristisch ist, wenn sie durch eine elektromagnetische Lesebestrahlung (10) erregt werden;
o wobei die Basismoleküle (M) den ersten kollektiven Zustand (EC₁) der Moleküle (M, M') haben, die geeignet sind, sich wenigstens teilweise in umgewandelte Moleküle (M') umzuwandeln, um in einen zweiten kollektiven Zustand (EC₂) der Moleküle (M, M') überzugehen, wenn sie durch eine elektromagnetische Schreibbestrahlung erregt werden,
o wobei die Moleküle (M, M') den zweiten kollektiven Zustand (EC₂) der Moleküle (M,M') haben, die geeignet sind, ein zweites Signal zweiter Oberschwingung (SH₂) zu generieren, das für diesen zweiten kollektiven Zustand (EC₂) der Moleküle (M,M') charakteristisch ist, wenn sie durch die elektromagnetische Lesebestrahlung (10) erregt werden;
**dadurch gekennzeichnet, dass** die Basismoleküle (M) eine Molekularstruktur basierend auf einem Kumarinskelett von dem Typ aufweisen: 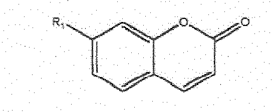
■ bei dem R₁ einer Befestigungsstelle des Kumarinskeletts an einer Polymermatrix entspricht.

2. Aufzeichnungsträger gemäß Anspruch 1, bei dem die Basismoleküle (M) eine Molekularstruktur basierend auf einem Kumarinskelett von dem Typ aufweisen: 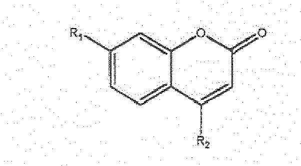
■ bei dem R₂ einem Substituenten entspricht.

3. Aufzeichnungsträger gemäß Anspruch 2, bei dem der Substituent R₂ eine Methylgruppierung ist.

4. Aufzeichnungsträger gemäß Anspruch 2, bei dem der Substituent R₂ ein Wasserstoffatom ist.

5. Aufzeichnungsträger gemäß Anspruch 1 bis 4, bei dem die Polymermatrix ein Methacrylatderivat der Form ist: 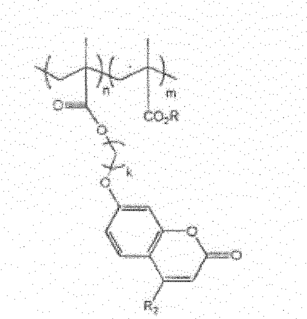
bei dem: k, n und m positive Zahlen sind.

6. Aufzeichnungsträger gemäß Anspruch 5, bei dem:
■ R ein Methyl (CH3) oder ein Butyl (*n*-C₄H₉) ist;
• k gleich 0, 2 oder 6 ist; und
• n/m einen zwischen 1/1 bis 1/5 inbegriffenen Wert hat.

7. Aufzeichnungsträger gemäß Anspruch 1 bis 6, bei dem die Basismoleküle (M) geeignet sind, sich per photoinduzierter Dimerisation in umgewandelte Moleküle (M') zu verwandeln.

8. Aufzeichnungsträger gemäß Anspruch 1 bis 7, bei dem:
• die Basismoleküle (M) geeignet sind, in einem lokalen Bereich (9) einen kollektiven Zustand der Moleküle (M, M') aus n kollektiven Zuständen der Moleküle (M, M') anzunehmen, wobei n eine ganze Zahl von gleich oder größer 2 ist;
• die Moleküle (M, M') jedes der n-1 kollektiven Zustände der Moleküle (M, M') geeignet ist, ein n-1. Signal zweiter Oberschwingung (SHₙ₋₁) zu generieren, das für diesen kollektiven Zustand der Moleküle (MM') charakteristisch ist, wenn sie durch eine elektromagnetische Lesebestrahlung (10) erregt werden.

9. Aufzeichnungsträger gemäß Anspruch 8, bei dem jeder der n kollektiven Zustände der Moleküle (M, M') sich durch einen charakteristischen Prozentsatz der Basismoleküle (M) und der umgewandelten Moleküle (M') auszeichnet.

10. Reversibles Aufzeichnungsverfahren auf einem Aufzeichnungsträger per optischer Speicherung von wenigstens einer Information auf einer Schicht eines Trägermaterials, umfassend mehrere Stufen, bestehend aus:
■ die Basismoleküle (M) einen ersten kollektiven Zustand (EC₁) der Moleküle (M, M') in einem lokalen Bereich (9) annehmen lassen;
o wobei die Moleküle (M, M'), die den ersten kollektiven Zustand (EC₁) der Moleküle (M, M') in dem lokalen Bereich (9) haben, geeignet sind, ein erstes Signal zweiter Oberschwingung (SH₁) zu generieren, das für diesen ersten kollektiven Zustand (EC₁) der Moleküle (M, M') charakteristisch ist, wenn sie durch eine elektromagnetische Lesebestrahlung (10) erregt werden;
■ auf selektive Weise eine elektromagnetische Schreibbestrahlung wenigstens in einem Schreibbereich des genannten lokalen Bereichs (9) derart anwenden, dass ein Teil der Basismoleküle (M), die den ersten kollektiven Zustand (EC₁) der Moleküle (M, M') haben, in umgewandelte Moleküle (M') umgewandelt werden, so dass die Moleküle (M, M'), die den ersten kollektiven Zustand (EC₁) der Moleküle (M, M') haben, in einen zweiten kollektiven Zustand (EC₂) der Moleküle (M,M') übertragen werden;
o wobei die Moleküle (M, M'), die den zweiten kollektiven Zustand (EC2) der Moleküle (M, M') haben, geeignet sind, ein zweites Signal zweiter Oberschwingung (SH₂) zu generieren, das für diesen zweiten kollektiven Zustand (EC₂) der Moleküle (M, M') charakteristisch ist, wenn sie durch die elektromagnetische Lesebestrahlung (10) erregt werden;
**dadurch gekennzeichnet, dass** die Basismoleküle (M) eine Molekularstruktur basierend auf einem Kumarinskelett von dem Typ aufweisen: 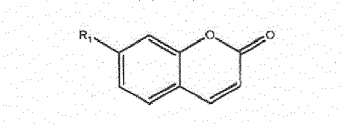
• bei dem R₁ einer Befestigungsstelle des Kumarinskeletts mit einer Polymermatrix entspricht.

11. Aufzeichnungsverfahren gemäß Anspruch 10, bei dem die Basismoleküle (M) eine Molekularstruktur basierend auf einem Kumarinskelett von dem Typ aufweisen: 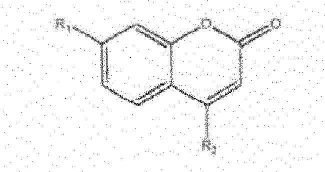
o bei dem R₂ einem Substituenten entspricht.

12. Aufzeichnungsverfahren gemäß Anspruch 11, bei dem der Substituent R2 eine Methylgruppierung CH₃ ist.

13. Aufzeichnungsverfahren gemäß Anspruch 11, bei dem der Substituent6 R2 ein Wasserstoffatom H ist.

14. Aufzeichnungsverfahren gemäß Anspruch 10 bis 13, bei dem die Polymermatrix ein Methacrylatderivat der Form: 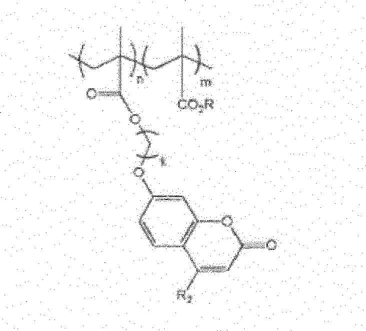
ist, bei dem: k, n und m positive Zahlen sind.

15. Aufzeichnungsverfahren gemäß Anspruch 14, bei dem:
• R ein Methyl (CH3) oder ein Butyl (n-C₄H₉) ist;
• k gleich 0, 2 oder 6 ist; und
• n/m einen zwischen 1/1 bis 1/5 inbegriffenen Wert hat.

16. Aufzeichnungsverfahren gemäß Anspruch 15, bei dem die elektromagnetische Schreibbestrahlung eine Wellenlänge von mehr als 300 nm derart aufweist, dass eine photoinduzierte Dimerisation der Basismoleküle (M) generiert wird.

17. Aufzeichnungsverfahren gemäß Anspruch 10 oder 16, bei dem die Basismoleküle (M) in einem lokalen Bereich (9) einen kollektiven Zustand der Moleküle (M) aus n kollektiven Zuständen (ECₙ) der Moleküle (M, M') aufweisen, wobei n eine ganze Zahl gleich oder größer als 2 ist, wobei das Verfahren darin besteht:
■ selektive Anwendung von mehreren elektromagnetischen spezifischen Schreibbestrahlungen auf die Schreibbereiche,
o wobei jede elektromagnetische spezifische Schreibbestrahlung die genannten Basismoleküle (M) vom ersten kollektiven Zustand (EC₁) der Moleküle (M, M') in umgewandelte Moleküle (M') übergehen lässt, um jeden Schreibbereich vom ersten kollektiven Zustand (EC₁) der Moleküle (M, M') auf einen der n kollektiven Zustände der Moleküle (M, M') in dem Schreibbereich übergehen zu lassen;
o so dass die Moleküle (M, M') jedes der n-1 kollektiven Zustände (ECₙ₋₁) der Moleküle (M) geeignet sind, ein n-1. Signal zweiter Oberschwingung (SHₙ₋₁) zu generieren, das für diesen kollektiven Zustand (ECₙ₋₁) der Moleküle (M) charakteristisch ist, wenn sie durch eine elektromagnetische Lesebestrahlung (10) erregt werden.

18. Aufzeichnungsverfahren gemäß Anspruch 10 bis 17, umfassend eine Stufe, bestehend aus:
• Selektive Anwendung einer elektromagnetischen Löschbestrahlung mindestens auf einem Löschbereich,
o wobei die magnetische Löschbestrahlung wenigstens einen Teil der umgewandelten Moleküle (M') in Basismoleküle (M) umwandelt.

19. Aufzeichnungsverfahren gemäß Anspruch 10 bis 17, umfassend eine Stufe bestehend aus:
■ generalisierte Anwendung einer elektromagnetischen Löschbestrahlung auf die umgewandelten Moleküle (M'),
o wobei die magnetische Löschbestrahlung die umgewandelten Moleküle (M') in Basismoleküle (M) umwandelt.

20. Aufzeichnungsverfahren gemäß Anspruch 19, bei dem die elektromagnetische Löschbestrahlung eine UV-Bestrahlung ist.

## Claims

1. A reversible recording medium based on optical storage of at least one item of information within a support material, the recording medium comprising at least one layer of a support material comprising:
■ base molecules (M) able to take, in a local zone (9), a first collective state (EC₁) of molecules (M, M');
o the molecules (M, M') having the first collective state (EC₁) of molecules (M, M') being able to generate a first signal of second harmonic (SH₁) characteristic of this first collective state (EC₁) of molecules (M, M') when they are excited by an electromagnetic reading radiation (10);
o the base molecules (M) having the first collective state (EC₁) of molecules (M, M') being able to transform, at least in part, into transformed molecules (M') so as to pass to a second collective state (EC₂) of molecules (M, M') when they are excited by an electromagnetic writing radiation
o the molecules (M, M') having the second collective state (EC₂) of molecules (M, M') being able to generate a second signal of second harmonic (SH₂) characteristic of this second collective state (EC₂) of molecules (M, M') when they are excited by the electromagnetic reading radiation (10);
**characterized in that** the base molecules (M) exhibit a molecular structure based on a coumarin skeleton of the type: 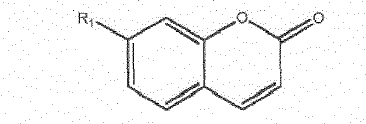
■ wherein R₁ corresponds to a site of attachment of the coumarin skeleton with a polymer matrix.

2. A recording medium according to claim 1, wherein the base molecules (M) exhibit a molecular structure based on a coumarin skeleton of the type: 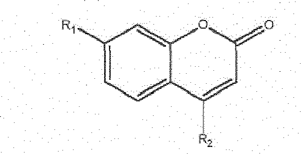
■ wherein R₂ corresponds to a substituent.

3. A recording medium according to claim 2, wherein the substituent R₂ is a methyl group.

4. A recording medium according to claim 2, wherein the substituent R₂ is a hydrogen atom.

5. A recording medium according to any one of claims 1 to 4, wherein the polymer matrix is a methacrylate derivative of the form: 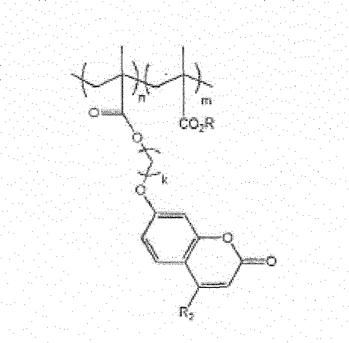
wherein k, n and m are positive numbers.

6. A recording medium according to claim 5, wherein:
■ R is a methyl (CH3) or a butyl (*n*-C₄H₉);
■ k is equal to 0, 2 or 6, and
■ n/m has a value ranging from 1/1 to 1/5.

7. A recording medium according to any one of claims 1 to 6, wherein the base molecules (M) are able to transform into molecules transformed (M') by photo-induced dimerization.

8. A recording medium according to any one of claims 1 to 7, wherein:
■ the base molecules (M) are able to take, in a local zone (9), a collective state of molecules (M, M') among n collective states of molecules (M, M'), with n being an integer greater than or equal to 2;
■ the molecules (M, M') of each one of the n-1 collective states of molecules (M, M') being able to generate an n-1^{th} signal of second harmonic (SHₙ₋₁) characteristic of this collective state of molecules (MM') when they are excited by an electromagnetic reading radiation (10).

9. A recording medium according to claim 8, wherein each one of the n collective state of molecules (M, M') is **characterized by** a characteristic rate of base molecules (M) and transformed molecules (M).

10. A method of reversible recording on a recording medium based on optical storage of at least one item of information within a layer of a support material comprising a plurality of steps consisting in:
■ having base molecules (M) take a first collective state (EC₁) of molecules (M, M') in a local zone (9);
o the molecules (M, M') having the first collective state (EC₁) of molecules (M, M') in the local zone (9) being able to generate a first signal of second harmonic (SH₁) characteristic of this first collective state (EC₁) of molecules (M, M') when they are excited by an electromagnetic reading radiation (10);
■ selectively applying an electromagnetic writing radiation at at least one writing zone of said local zone (9), so as to transform a part of the base molecules (M) having the first collective state (EC₁) of molecules (M, M') into transformed molecules (M') thereby passing the molecules (M, M') having the first collective state (EC₁) of molecules (M, M') to a second collective state (EC₂) of molecules (M, M');
o the molecules (M, M') having the second collective state (EC₂) of molecules (M, M') being able to generate a second signal of second harmonic (SH₂) characteristic of this second collective state (EC₂) of molecules (M, M') when they are excited by the electromagnetic reading radiation (10);
**characterized in that** the base molecules (M) exhibit a molecular structure based on a coumarin skeleton of the type: 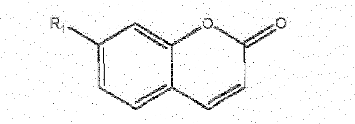
■ wherein R₁ corresponds to a site of attachment of the coumarin skeleton with a polymer matrix.

11. A recording method according to claim 10, wherein the base molecules (M) exhibit a molecular structure based on a coumarin skeleton of the type: 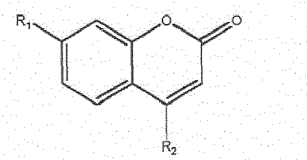
o wherein R₂ corresponds to a substituent.

12. A recording method according to claim 11, wherein the substituent R₂ is a methyl group CH₃.

13. A recording method according to claim 11, wherein the substituent R₂ is a hydrogen atom H.

14. A recording method according to any one of claims 10 to 13, wherein the polymer matrix is a methacrylate derivative of the form: 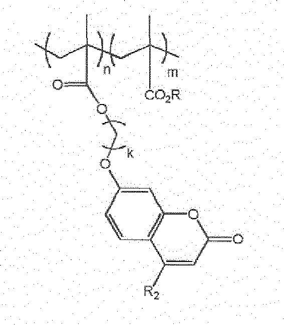
wherein k, n and m are positive numbers.

15. A recording method according to claim 14, wherein:
■ R is a methyl (CH3) or a butyl (*n*-C₉H₉);
■ k is equal to 0, 2 or 6; and
■ n/m has a value ranging from 1/1 to 1/5.

16. A recording method according to claim 15, wherein the electromagnetic writing radiation exhibits a wavelength greater than 300nm so as to generate a photo-induced dimerization of the base molecules (M)

17. A recording method according to one of claims 10 or 16, wherein the base molecules (M) exhibit, in a local zone (9), a collective state of molecules (M) among n collective states (ECₙ) of molecules (M, M'), with n being an integer greater than or equal to 2, the method consisting in:
■ selectively applying a plurality of specific electromagnetic writing radiations at writing zones,
o each specific electromagnetic writing radiation passing said base molecules (M) of the first collective state (EC₁) of molecules (M, M') to transformed molecules (M') so as to pass each writing zone of the first collective state (EC₁) of molecules (M, M') to one of the n collective states of molecules (M, M') in the writing zone,
o so that the molecules (M, M') of each one of the n-1 collective states (ECₙ₋₁) of molecules (M) are able to generate an n-1ₜₕ signal of second harmonic (SHₙ₋₁) characteristic of this collective state (ECₙ₋₁) of molecules (M) when they are excited by an electromagnetic reading radiation (10).

18. A recording method according to any one of claims 10 to 17, comprising a step consisting in:
■ selectively applying an electromagnetic erasing radiation at at least one erasing zone,
o the erasing magnetic radiation transforming at least a part of the transformed molecules (M') into base molecules (M).

19. A recording method according to any one of claims 10 to 17, comprising a step consisting in:
■ generally applying an electromagnetic erasing radiation at the transformed molecules (M'),
o the magnetic erasing radiation transforming the transformed molecules (M`) into base molecules (M).

20. A recording method according to claim 19, wherein the electromagnetic erasing radiation is a UV radiation.
